# EUROPEAN PATENT APPLICATION

(11) **EP 1 811 365 A2**
(43) Date of publication of application: **25.07.2007**
(21) Application number: 06127105.2
(22) Date of filing: 22.12.2006
(51) Int. Cl.: G06F 3/048, G06F 3/033

(54) **Input unit, mobile terminal unit, and content data manipulation method in mobile terminal unit**

(30) Priority: 28.12.2005 JP 2005377944
(71) Applicant: MATSUSHITA ELECTRIC INDUSTRIAL CO., LTD, Kadoma-shi, Osaka 571-8501 (JP)
(72) Inventor: Inoue, Takefumi, c/o Matsushita Electric Indl. Co., Chuo-ku, Osaka-shi, Osaka 540-6319 (JP); Sata, Norifumi, c/o Matsushita Electric Indl. Co., Chuo-ku, Osaka-shi, Osaka 540-6319 (JP)
(74) Representative: Pautex Schneider, Nicole Véronique

(57) **Abstract**

A mobile terminal unit that includes: a display section that displays thereon content data; a manipulation section that is provided close to the display section for being in charge of manipulation related to the content data; a pad section that detects the movement of an object on the display section and the manipulation section; and a control section that goes through a predetermined process with respect to the content data based on the movement of the object detected by the pad section.

## Description

### FIELD OF THE INVENTION

The present invention relates to an input unit for making inputs of various types of information to a unit, a mobile terminal unit such as mobile phone using the input unit, and a content data manipulation method in the mobile terminal unit.

### DESCRIPTION OF THE RELATED ART

With the recent performance advancement and multifunctionality observed in mobile terminal units such as mobile phones, a larger number of mobile terminal units become capable of browsing content data downloaded over the Internet, from memory cards, or others.

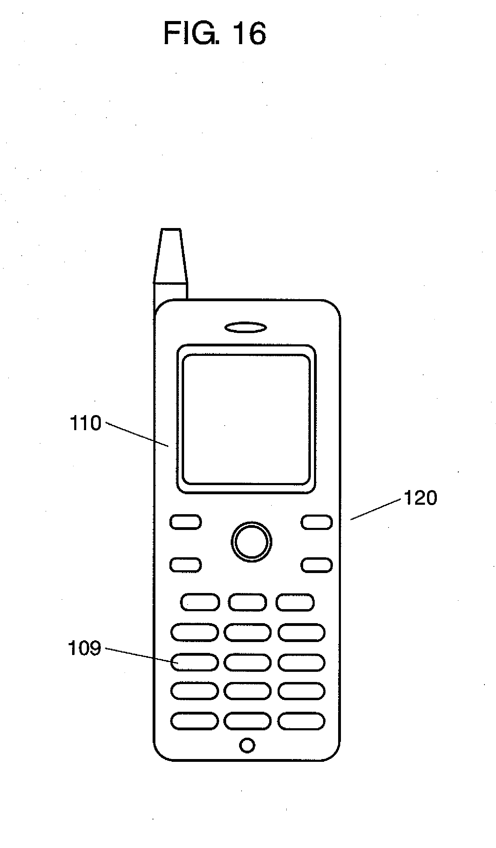

In the below, an exemplary content data manipulation method in a mobile terminal unit of previous type is described by referring to the accompanying drawings. FIG. 16 is a diagram showing the configuration of a mobile terminal unit of previous type.

As shown in FIG. 16, mobile phone 120 being a mobile terminal unit is provided with display section 110 and ten-key pad 109. A user operates ten-key pad 109 of mobile phone 120 for connection to the Internet, and downloads content data from Websites. The content data is then stored in a memory inside of a unit. When such an operation is repeated for a number of times, the content data is stored in order of being downloaded in a memory inside of mobile phone 120.

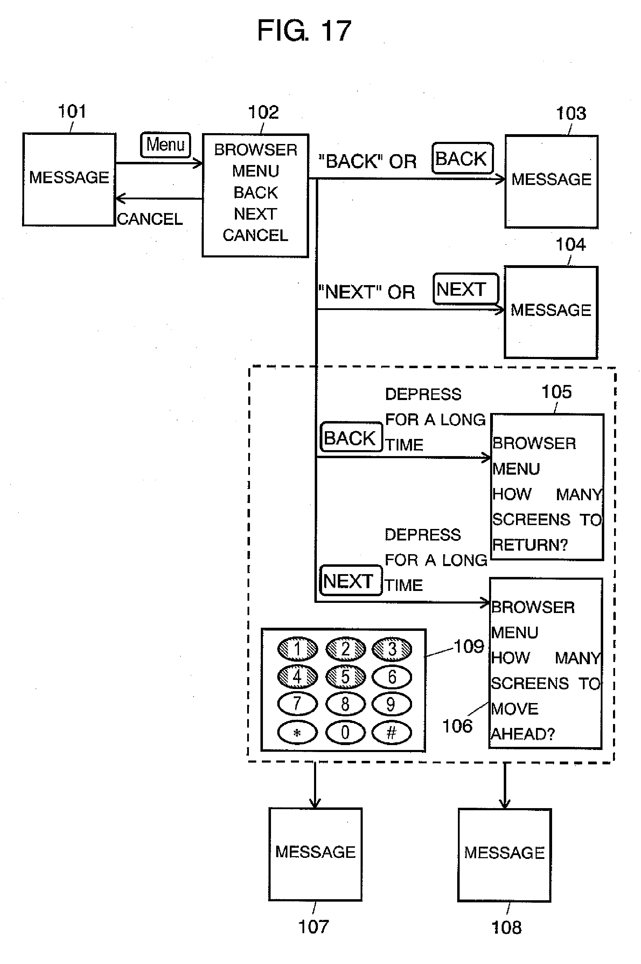

Described now is how to browse such a plurality of content data stored in the memory inside of mobile phone 120. FIG. 17 is a diagram showing a content data manipulation method in a previous mobile terminal unit.

As shown in FIG. 17, exemplified is a case where display section 110 of a unit is displaying message 101 being exemplary content data. In this case, when a predetermined key, e.g., menu key, is depressed, display section 110 displays a screen of browser menu 102.

In browser menu 102, a display of "back" is selected or a key assigned to the function of "back" is depressed for a short time. In response thereto, the content data downloaded preceding to message 101 is selected so that the content data, i.e., message 103, is displayed on display section 110 of mobile phone 120.

With browser menu 102 displayed, when a display of "next" is selected or a key assigned to the function of "next" is depressed for a short time, the content data downloaded subsequent to message 101 is selected so that the content data, i.e. , message 104, is displayed on display section 110 of the unit.

By repeating such an operation, any downloaded contents become available for browsing one by one in order of being downloaded or in order reverse thereto.

For simplifying such a method, with previous mobile phone 120, browser menu screen 105 or 106 appears when a key assigned to the function of "back" or "next" is depressed for a long time, i.e., a predetermined length of time or longer. At the same time, a numeric character(s) of ten-key pad 109 are illuminated in accordance with the number of contents stored in the memory. Assuming that five contents are stored in the memory and available for browsing, as shown in FIG. 17 by diagonally shaded areas of ten-key pad 109, the keys of 1 to 5 are all illuminated.

With mobile phone 120, when the user depresses any of the keys of 1 to 5 depending on how many screens he or she wants to return or move ahead, a message corresponding thereto, i.e. , message 107 or 108, is directly displayed.

Such previous technology is described in Japanese Patent Unexamined Publication No. 2002-72954, for example.

In such a previous technology, however, every downloaded content data is made available for browsing, i.e., entirely subjected to function performance of "back" or "next". In the previous technology, any content data once downloaded but no longer needed thus remains available for browsing, thereby resulting in a complicated operation especially with a larger number of content data.

With the method of directly selecting any desired content data through operation of ten-key pad 109, a user has to remember how many screens he or she is supposed to skip forward or reverse before finding his or her content data in need, counting from the current screen.

### SUMMARY OF THE INVENTION

The invention is proposed in consideration of such problems observed with the previous technology, and provides an input unit and a mobile terminal unit capable of manipulating content data in a simple and easy manner, and a content data manipulation method in the mobile terminal unit.

An aspect of the invention is directed to an input unit, including: a display section that displays thereon content data; a manipulation section that is provided close to the display section for being in charge of manipulation related to the content data; and a pad section that detects the movement of an object on the display section and the manipulation section.

With such a configuration, there is provided an input unit that allows manipulation of content data with such a simple and easy manner as moving an object on the display section and the operation section.

Another aspect of the invention is directed to a mobile terminal unit, including: a display section that displays thereon content data; a manipulation section that is provided close to the display section for being in charge of manipulation related to the content data; a pad section that detects the movement of an object on the display section and the manipulation section; and a control section that goes through a predetermined process with respect to the content data based on the movement of the object detected by the pad section.

With such a configuration, there is provided a mobile terminal unit that allows manipulation of content data with such a simple and easy manner as moving an object on the display section and the operation section.

As an alternative configuration, a memory section may be provided for storing the content data, and when the pad section detects the movement of the object being directed from the display section to the manipulation section, the control section may make the memory section store therein the content data.

Such a configuration implements a mobile terminal unit that can leave out any desired content data from those remained available for browsing, and put the data into a temporary-storage state with such a simple and easy operation of a user moving object from the display section to the manipulation section provided in a close range.

As another alternative configuration, when the pad section detects the movement of the object being directed from the display section to the manipulation section, the control section may make the display section hide a display of the content data.

Such a configuration enables a user to intuitively know that the content data is put into a temporary-storage state.

Alternatively, the manipulation section may be provided with an explicit-display section that shows the content data being stored in the memory section, and when the pad section detects the movement of the object being directed from the display section to the manipulation section, the control section may make the explicit-display section explicitly display that the content data is stored in the memory section.

With this being the configuration, when a user moves object from the display section to the manipulation section, the explicit-display section displays explicitly that the content data is stored in the memory section so that the user can know more clearly that the content data is now in storage.

Still alternatively, the explicit-display section may explicitly display a title of the content data.

This enables to notify a user also of the title of the content data in storage.

Still alternatively, the manipulation section may be plurally provided, the manipulation sections are each provided with the explicit-display section, and when the pad section detects the movement of the object being directed from the display section to the manipulation section, the control section may make any of the explicit-display sections located at a position where the object remains display explicitly that the content data is stored in the memory section.

Such a configuration helps a user implement intuitive and easy-to-know manipulation as if storing a piece of content data into each of a plurality of manipulation sections. The user also knows by the number of the illuminating explicit-display sections at a glance how many content data are already in storage.

As another possible configuration, a memory section may be provided for storing therein the content data, and when the pad section detects the movement of the object being directed from the manipulation section to the display section, the control section may read the content data from the memory section.

If this is the configuration, a user can read out the content data in storage from the memory with an easy operation of sliding object from the manipulation section to the display section.

Alternatively, when the pad section detects the movement of the object being directed from the manipulation section to the display section, the control section may make the display section display thereon the content data.

This configuration enables a user to intuitively know that the content data in storage of the memory is now read.

Still alternatively, when detecting a predetermined operation, the control section may notify a user of details of the content data stored in the memory section.

This configuration can notify a user of the details of the content data stored in the memory section.

As an alternative configuration, the predetermined operation may be of stopping the object on the manipulation section for a predetermined length of time or longer.

With this being the configuration, a user can be notified of the details of the content data through operation consecutively performed with the operation of storing the content data.

As another alternative configuration, when detecting the predetermined operation, the control section may enlarge and display the content data with no overlay in a display area of the display section.

This configuration offers a user the data other than the temporarily-stored content data in the easier-to-see format.

The predetermined operation may be of tapping the display section.

With this being the configuration, a user can be notified of the details of the content data displayed on the display section in the easier-to-see format through operation consecutively made with the operation of storing the content data.

The manipulation section may be provided with a light-guidance section that extends to the surface including the side surface of a cabinet.

Such a configuration enables to check from the side surface of the cabinet that the content data is stored so that the viewability can be increased to a further extent.

The pad section may detect the movement of a pen or a finger on the display section and the manipulation section.

This allows the user to use a pen or a finger for operation.

Still another aspect of the invention is directed to a content data manipulation method using a mobile terminal unit that includes: a display section that displays thereon content data; a manipulation section that is provided close to the display section for being in charge of manipulation related to the content data; a pad section that detects the movement of an object on the display section and the manipulation section; and a control section that exercises control over the display section and the pad section. The method includes: a first step of detecting the movement of the object by the pad section; and a second step of going through a predetermined process by the control section with respect to the content data based on the movement of the object detected by the pad section.

With such a method, there is provided a content data manipulation method for use with a mobile terminal unit that can manipulate content data with such a simple and easy manner as moving an object on the display section and the operation section.

As such, the invention can provide an input unit and a mobile terminal unit capable of manipulating content data in a simple and easy manner, and a content data manipulation method in the mobile terminal unit.

### BRIEF DESCRIPTION OF THE DRAWINGS

FIG. 1 is a view of the front configuration of a mobile phone in an embodiment of the invention;
FIG. 2 is a block diagram showing the configuration of the mobile phone in the embodiment of the invention;
FIG. 3 is a diagram for illustrating a method of using the mobile phone in the embodiment of the invention;
FIG. 4 is a diagram for illustrating the method of using the mobile phone in the embodiment of the invention;
FIG. 5 is a diagram for illustrating the method of using the mobile phone in the embodiment of the invention;
FIG. 6 is a diagram for illustrating the method of using the mobile phone in the embodiment of the invention;
FIG. 7 is a diagram for illustrating another method of using the mobile phone in the embodiment of the invention;
FIG. 8 is a diagram for illustrating the method of using the mobile phone in the embodiment of the invention;
FIG. 9 is a diagram for illustrating the method of using the mobile phone in the embodiment of the invention;
FIG. 10 is a diagram for illustrating the method of using the mobile phone in the embodiment of the invention;
FIG. 11 is a diagram for illustrating still another method of using the mobile phone in the embodiment of the invention;
FIG. 12 is a diagram for illustrating the method of using the mobile phone in the embodiment of the invention;
FIG. 13 is a diagram for illustrating the method of using the mobile phone in the embodiment of the invention;
FIG. 14 is a diagram for illustrating the method of using the mobile phone in the embodiment of the invention;
FIG. 15 is a side view showing another configuration of the mobile phone in the embodiment;
FIG. 16 is a diagram showing the configuration of a mobile terminal unit of previous type; and
FIG. 17 is a diagram showing a content data manipulation method in the previous mobile terminal unit.

### DETAILED DESCRIPTION OF PREFERRED EMBODIMENT

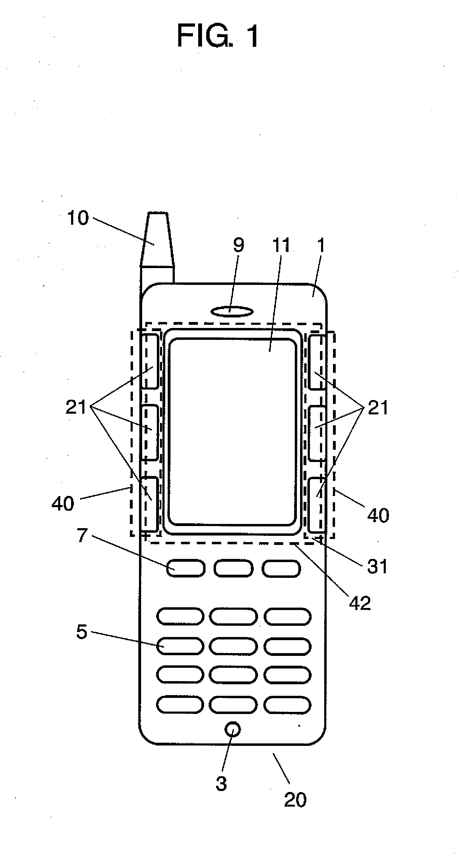

In the below, an embodiment of the invention is described by referring to FIGS. 1 to 15.

### (Embodiment)

In the embodiment, a mobile terminal unit is exemplified by mobile phone 20 for a description.

FIG. 1 is a view of the front configuration of mobile phone 20 in the embodiment of the invention.

As shown in FIG. 1, mobile phone 20 includes a unit cabinet 1 having the outside shape of substantially a rectangular parallelepiped, and including therein a wiring board. Mobile phone 20 is provided with, on the manipulation surface side thereof, in order from bottom to top of FIG. 1, transmitter section 3, ten-key pad 5, function key 7, display section 11, and receiver section 9. Transmitter section 3 receives the voice of a user for use for phone transmission, and receiver section 9 receives the voice of a person on the other end when the unit serves as a phone. Ten-key pad 5 is used for input of numeric digits or others, function key 7 is used for making inputs to activate any specific function, and display section 11 is used for displaying thereon content data or others.

Transmitter section 3 is configured by a microphone or others disposed at a predetermined position inside of unit cabinet 1.

Ten-key pad 5 and function key 7 are each configured by a push-down switch, disposed at a predetermined position on the wiring board to be ready to be depressed.

Display section 11 includes an LCD (Liquid Crystal Display) or others as a function element.

Receiver section 9 is configuredusing a speaker or others.

Mobile phone 20 includes antenna 10 for transmission and reception of radio waves.

Mobile phone 20 also includes edge portion 40 of a predetermined width on the sides of a portion at which display section 11 of unit cabinet 1 is disposed. Edge portion 40 is provided with manipulation section 21, which is provided separately from display section 11 for manipulation of data for saving. As shown in FIG. 1, for data-saving manipulation as such, the manipulation section 21 is provided to edge portions 40 three each on each of the sides of display section 11.

Mobile phone 20 includes explicit-display section 15 for use to explicitly notify a user of whether data-saving manipulation is performed, i.e. , whether content data is stored in a memory inside of the unit cabinet 1. Such explicit-display section 15 is disposed in accordance with the position where manipulation sections 21 are located for data-saving manipulation. To be specific, manipulation sections 21 for data-saving manipulation are each configured by a light-transmissive resin component, and explicit-display section 15 being an organic EL (electroluminescent) device is disposed at the position corresponding to each of manipulation sections 21 inside of unit cabinet 1, e.g., directly beneath each corresponding manipulation section 21, so that explicit-display sections 15 fulfill the function.

In mobile phone 20, pad member 31 is disposed corresponding to an area carrying thereon display section 11 and manipulation sections 21 for data-saving manipulation, i.e., area 42 enclosed by dotted lines in FIG. 1. Padmember 31 is provided for detecting the movement of an object (such as user's finger or others) in area 42. With pad member 31, when the user's finger is placed on area 42 on unit cabinet 1, for example, a signal is generated for use to specify the coordinates of the position. Pad member 31 is exemplified as being capacitance type, but this is surely not restrictive. Pad member 31 may be a pressure-sensitive resistance film or others.

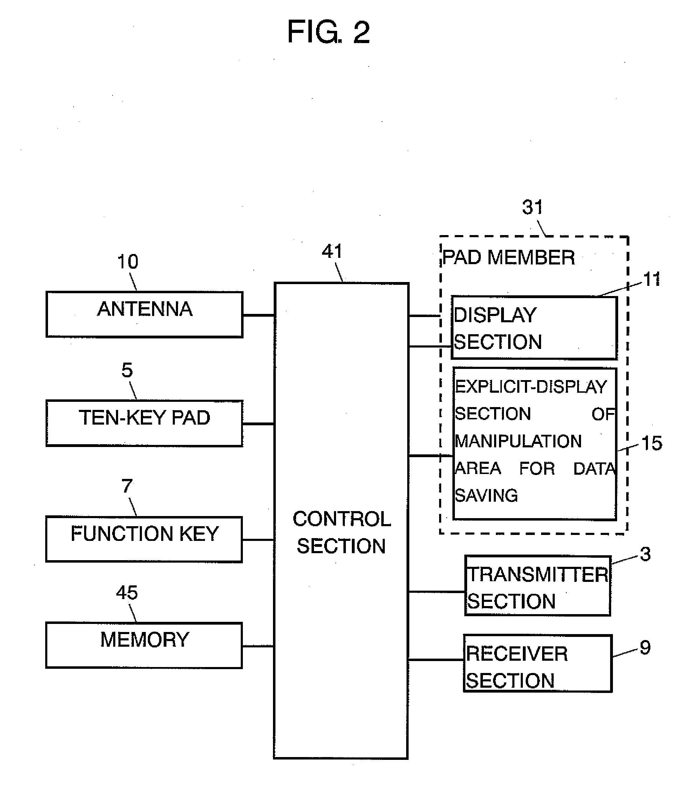

By referring to FIG. 2, a function block of mobile phone 20 is now described in detail. FIG. 2 is a block diagram showing the configuration of mobile phone 20 in the embodiment of the invention.

As shown in FIG. 2, mobile phone 20 is provided with control section 41 including a microcomputer or others disposed on the wiring board. Control section 41 is connected all with antenna 10, ten-key 5, function key 7, pad member 31, display section 11, explicit-display section 15, transmitter section 3, and receiver section 9. Control section 41 exchanges various types of signals with these components, and control section 41 exercises control thereover.

Control section 41 is connected with memory 45, and control section 41 is also in charge of exercising control over data input/output to/from memory 45.

Mobile phone 20 has a function of browsing Websites using a browser through connection to the Internet.

Mobile phone 20 is capable of offering various services, e. g. , making phone calls by depression of ten-key pad 5, function key 7, or others, sending and receiving E-mails, reading data of photo images, documents, or others stored in memory 45 for display, Website browsing through connection to the Internet, and telephone conversation with moving pictures, i.e., picture phone. In the below, under such various service conditions, information to be displayed on display section 11 of mobile phone 20, e.g., phone numbers, E-mails , photo images, documents, Websites, and moving images, is collectively referred to as content data.

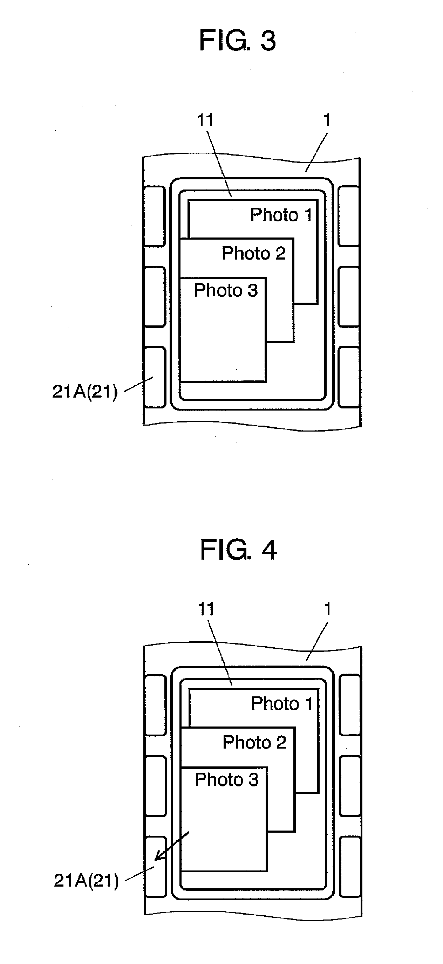

Described next is how to use mobile phone 20 in this embodiment. FIGS. 3 to 14 are each a diagram for illustrating a method of using mobile phone 20 in the embodiment of the invention.

First of all, a user operates function key 7 or others to display a plurality of content data one by one on display section 11. When the content data is photo images, as exemplarily shown in FIG. 3, the content data, i.e., images of Photo1 to Photo3, appears on display section 11 with an overlay in order of display, i.e., the recent image is displayed toward the front compared with the other two. In FIG. 3 example, Photo3 is displayed at the top toward the front, and Photo2 is displayed therebehind and then Photo1. With such a display, the user can view only Photo3 in its entirety.

Described next is a case, in the state of FIG. 3 example, of the user wanting to view Photo2 in its entirety. In order to view Photo2 in its entirety, the user goes through an operation of temporarily saving the image of Photo3 displayed thereover.

More in detail, as indicated by an arrow in FIG. 4, the user first places his or her finger on the position in display section 11 where the image of Photo3 is displayed. The user then moves and slides his or her finger toward operation section 21A for data-saving manipulation while touching the upper surface of display section 11.

At the time point when the user places his or her finger in the area of display section 11 displaying the image of Photo3, pad member 31 forwards a signal to control section 41 for specifying the coordinates of the position where the user's finger is placed.

Based on the signal provided by pad member 31, control section 41 accordingly specifies the position on display section 11 where the user' s finger is placed, and based on the coordinates of the position, selects the content data corresponding thereto for saving. In the state of FIG. 4 example, control section 41 assumes as the user is selecting the content data of Photo3.

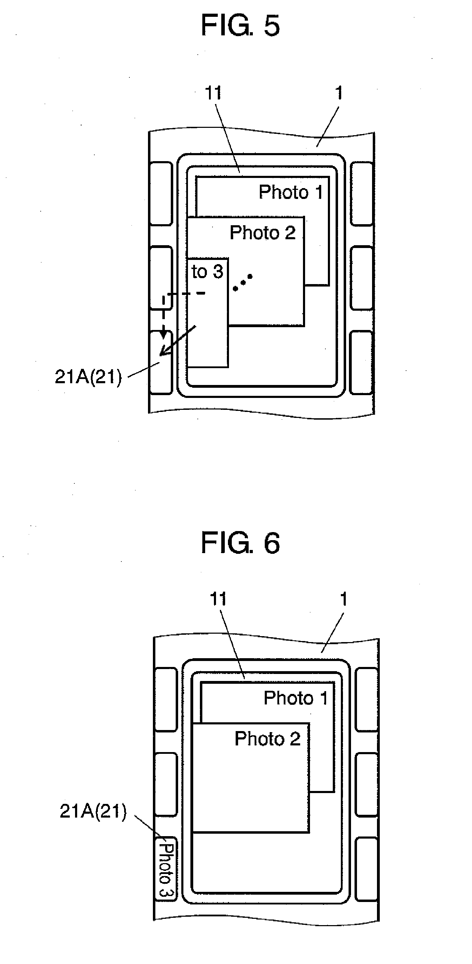

When the user continuously moves his or her finger, as shown in FIG. 5, control section 41 exercises control to move the display of Photo3 in accordance with the direction and speed of the finger movement. Such control is exercised based on the signal provided by pad member 31 to control section 41. As such, the user feels as if the image of Photo3 moves together with his or her finger, thereby implementing very intuitive operation.

When the user's finger reaches and stops on a lower-left portion of FIG. 5 for data-saving manipulation, i.e. , operation section 21A, control section hides (deletes) the image of Photo3 from display section 11, and stores image data of Photo3 into memory 45. Such deletion and storage are made based on the signal provided by pad member 31, indicating the coordinates of the position. Control section 41 also exercises control over the display of explicit-display section 15, which is disposed corresponding to manipulation section 21A. To be specific, as shown in FIG. 6, on manipulation section 21A in charge of data-saving manipulation, explicit-display section 15 serves to display the title of content data, e.g., "Photo3", stored in the memory 45 on a temporary basis. This favorably enables the user to view the image of Photo2 substantially entirely with ease, and to intuitively know that the image of Photo3 is hidden from display section 11. The display of the content data titles made by explicit-display section 15 also enables the user to intuitively know that the content data of Photo3 is now stored in memory 45.

In this case, control section 41 determines which manipulation section 21 is to be explicitly displayed by explicit -display section 15 . Such a determination is made based on the coordinates of the position where the user's finger eventually stops. When the user moves his or her finger along a dotted arrow in FIG. 5, i.e., when the finger moves over another manipulation section 21 before reaching manipulation section 21 being a final destination, for example, control section 41 exercises display control over explicit-display section 15 of manipulation section 21A located at the position where the user's finger eventually stops.

In the state of FIG. 6, i.e., in the state that the content data of Photo3 is hidden from display section 11 and stored in memory 45 on a temporary basis, for displaying again the image of Photo3 in display section 11, the user goes through the above-described operation in reverse order. That is, the user places his or her finger on manipulation section 21A indicating that the content data of Photo3 is now saved, and simply slides the finger toward inside of display section 11.

At the time point when the user places his or her finger on manipulation section 21A, based on the signal provided by pad member 31, control section 41 determines that the content data corresponding to manipulation section 21A, i.e., content data of Photo3, is selected by the user.

Control section 41 then reads out the image data of Photo3 stored in memory 45, and displays the image of Photo3 in display 11 bit by bit in accordance with the movement of the finger. Such a display is made based on the signal coming from pad member 31 whenever the user moves his or her finger. During the manipulation procedure as such, the display of content data title, i.e., display of "Photo3", explicitly made by explicit-display section 15 onto manipulation section 21A is disappeared by control of control section 41 when the image of Photo3 is displayed again in display section 11.

Through such operation, the user feels as if the content data of Photo3 stored in manipulation section 21A appears on display section 11 in response to his or her finger movement, thereby implementing very easy-to-understand and intuitive operation.

Note that the above-described operation procedure also includes the method of manipulating the images of Photo1 and Photo2 to move toward manipulation sections 21 for temporary storage into memory 45, and the method of displaying again the temporarily-stored content data in display section 11.

As described in the foregoing, mobile phone 20 in this embodiment includes manipulation sections 21 at portions close to display section 11 for data-saving manipulation, and pad member 31 is disposed not only on display section 11 but also on areas including manipulation sections 21 for the aim of detecting the movement of an object.

As such, with mobile phone 20 of the embodiment, by a user placing his or her finger in display section 11, the position where the user's finger is placed is detected so that any corresponding content data is controllably selected as a movement object. This thus favorably helps the operation of moving the content data or others to be completed in a smooth manner.

Mobile phone 20 of the embodiment can also put the content data selected as a movement object into a temporary-storage state by a user sliding his or her finger from display section 11 onto any of manipulation sections 21 for data-saving manipulation. Mobile phone 20 can also display again the temporarily-stored content data by the user sliding his or her finger from manipulation section 21A provided for data-saving manipulation into display section 11.

As such, with mobile phone 20 of the embodiment, the operation of putting the content data into the temporary- storage state, or the operation of displaying again the content data are performed based on a finger-abutting-position or a movement direction of the finger. This is very easy for the user to understand, and these operations are simply done only by tracing the surface of unit cabinet 1, thereby offering excellent operability.

Exemplified in the above is the case of putting any one specific content data into the temporary-storage state, and displaying again the content data. The invention is not surely restrictive to such an example, and the following exemplary case is also possible. That is, if a plurality of content data includes any content data that is no longer needed, the above-described operation procedure is repeatedly applied to each of manipulation sections 21. In this manner, it becomes possible to put a plurality of content data into the temporary-stored state, and only any needed content data can be displayed on display section 11 for use.

Considered now is a possible case where, after manipulation section 21A is subjected to an operation to put any predetermined content data into the temporary-storage state, a user erroneously goes through an operation of putting any other content data into the temporary-storage state, e.g., manipulation section 21 in which explicit-display section 15 is illuminated is subjected to an operation of storing another content data. With this being the case, the content data may be simply written over the existing content data. Desirably, in the practical sense, with a judgment that the user erroneously executes the operation, a warning sound such as a warning beep coming from a speaker or others may warn the user.

For control application in such a case, using a signal provided by pad member 31 as a key, if control section 41 is already through with the operation for manipulation section 21A of putting any specific content data into temporary-storage state, the user may be warned by a warning sound. The signal using as a key is provided when user erroneously executes the operation as described above, indicating the coordinates as information that the user's finger moved from inside of display section 11 to manipulation section 21A.

Described next is a case where, in mobile phone 20 of the embodiment, content data is a screen of information about a Website on the Internet.

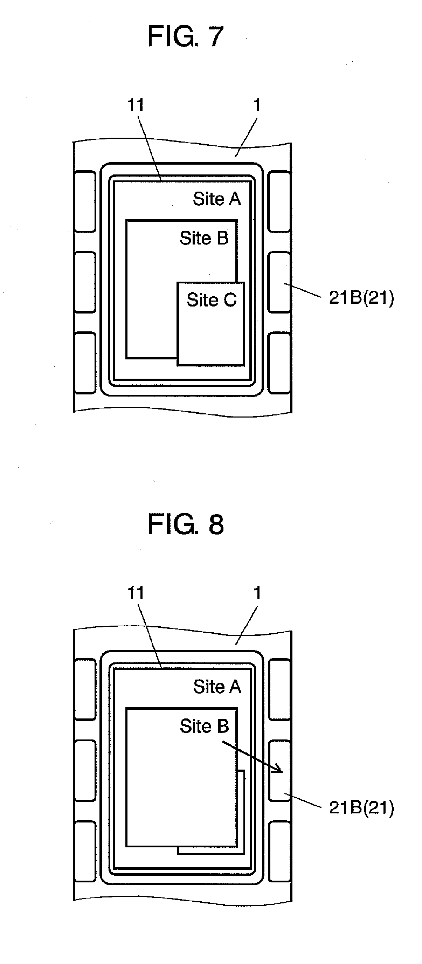

First of all, a user operates function key 7 or others to establish a connection with any Website on the Internet, for example, and as shown in FIG. 7, a plurality of content data, i.e., screens of Website information, is displayed in display section 11. Note here that such displayed Website-information screens may display information about several different Websites at the same time, or display several layers of information of any one specific Website.

In FIG. 7 example, schematically, three Website-information screens are displayed with an overlay, i.e., SiteA to SiteC, about three different Websites. SiteC is displayed on SiteB with an overlay, and SiteB is displayed on SiteA with an overlay. On display section 11, only SiteC can be viewed in its entirety.

Described next is a case, in the state of FIG. 7 example, of the user wanting to view SiteB in its entirety, and a case of the user wanting to save the image of SiteB on a temporary basis. In such cases, the user first places his or her finger at the position in display section 11 where the information screen of SiteB is displayed.

In response thereto, pad member 31 forwards a signal to control section 41 for specifying the coordinates of the position where the user's finger is placed. Similarly to the above-described case, control section 41 accordingly determines that the information screen of SiteB is selected as a manipulation target. Note here that the information about SiteB is assumed as being entirely selected as a manipulation target, including the portion behind the information screen of SiteC . As shown in FIG. 8, control section 41 makes display section 11 display the image of SiteB in such a manner that the image is located toward the front.

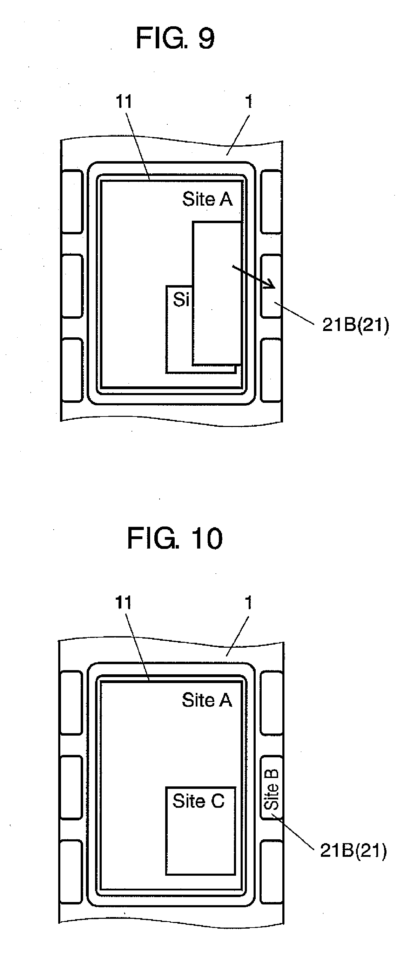

When the user wants to save the image of SiteB, as indicated by an arrow in FIG. 8, the user continuously slides his or her finger toward manipulation section 21B for data-saving manipulation. In response thereto, the currently-selected information screen of SiteB is moved bit by bit in accordance with the direction and speed of the finger movement (refer to FIG. 9).

When the user's finger reaches and stops on a right-middle manipulation section of FIG. 9 for data-saving manipulation, i.e., manipulation section 21B, as shown in FIG. 10, the information screen of SiteB is hidden from display section 11 and stored in memory 45. At the same time, details of the content data, i.e., title of "SiteB", are explicitly displayed in text on manipulation section 21B by explicit-display section 15. Such control is exercised similarly to the above case with the content data being photo images.

As such, with mobile phone 20 of this embodiment, during the operation, the user can naturally feel as if he or she moves the image of SiteB, and puts the image into manipulation section 21B.

Note that the operation and control of displaying on display section 11 again the temporarily-stored information screen of SiteB are the same as those in the above-described case of using the content data of photo images. The user is only required to go through an operation of simply moving finger on the upper surface of unit cabinet 1 from manipulation section 21B to display section 11.

The operation of putting a plurality of predetermined content data each into the temporary-storage state, or the fact that an information screen of any needed content data from those in storage can be displayed again for use are the same as those in the above-described case of using the content data of photo images.

Further improvements are possible for mobile phone 20 in this embodiment. Exemplified here is a case where an information screen of a predetermined Website is currently being in the temporary-storage state after a user's operation of moving his or her finger from display section 11 onto manipulation section 21B. In this case, if the user's operation is executed differently from the one that is supposed to be to put the content data into the temporary-storage state or to display the content data again, e.g., the user puts his or her finger on manipulation section 21B for a predetermined length of time, control section 41 may notify the user of the details of the temporary-stored content data, thereby leading to much better operability. Such notification can be made in various manners, e.g., a speaker or others provided to receiver section 9 may be used for a sound, or a pop-up screen may be provided to display section 11 for a message.

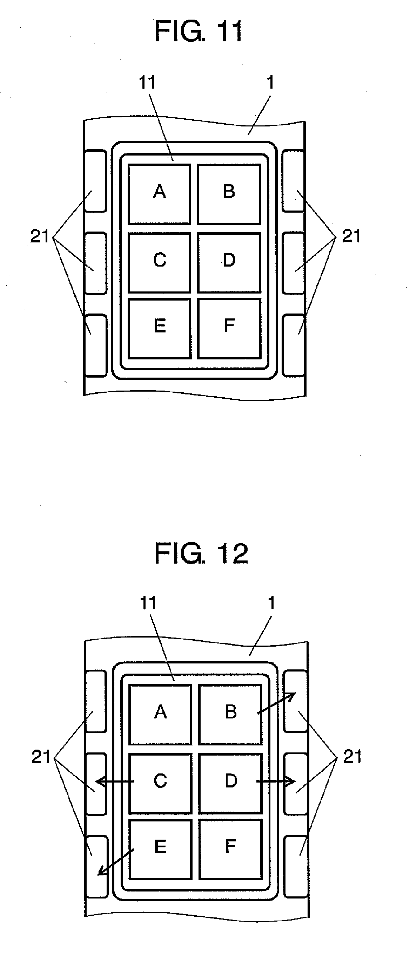

By referring to FIGS. 11 to 14, described next is an exemplary operation when mobile phone 20 in the embodiment offers a picture phone service, i.e., telephone conversation is made with moving pictures. Assuming that the user is making conversations with six speakers at the same time, and images of six speakers are all displayed on display section 11.

Exemplified here is a case that, from the images of *A, B, C, D, E,* and *F,* the user wants to temporarily store a part of the images, e.g., *B, C, D* and *E*.

If this is the case, with six images of FIG. 11 all displayed at the same time, as shown in FIG. 12, the user goes through an operation of touching and sliding his or her finger on unit cabinet 1 from any of the images displayed on display section 11 to its corresponding manipulation section 21. This operation is executed to each of the images of *B, C, D*, and *E*, thereby the four images of *B, C, D*, and *E* are stored in memory 45 on a temporary basis.

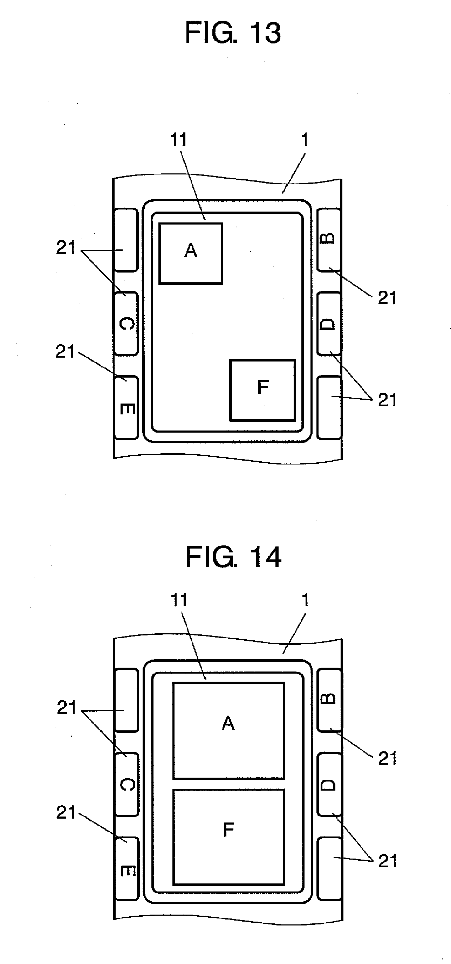

As a result, as shown in FIG. 13, display section 11 displays thereon screen information about two speakers of *A* and *F* who are not selected as saving targets. Their information screens remain the same in size as those before the data storage. Explicit-display section 15 then displays explicitly that the images of *B, C, D,* and *E* are stored in four manipulation sections 21, respectively. As such, the user can know that the images of *B, C, D*, and *E* are all stored in memory 45.

At this time, for the aim of making the images of *A* and *F* easy to view, in the state of FIG. 13, the user goes through an operation different from that of temporarily storing the content data or of displaying again the temporarily-stored content data as above, e.g., taps twice on display section 11 using a finger or other objects.

In response to such an operation, pad member 31 (not shown in FIG. 13) forwards a signal to control section 41, indicating that the currently executed operation is different from the normal operation. Based on the signal, control section 41 displays the information screens of the two speakers of *A* and *F* on display section 11. Prior to making such a display, control section 41 enlarges the information screens to each equally cover ahalf of display section 11 in its entirety with no overlay.

Such an operation of enlarging and displaying the images is preferably executed as a procedure after the operation of temporarily storing the content data, and the operation of displaying again the temporarily-stored content data. If executed as such, the resulting procedure leads to much better operability. If the operation of enlarging the images for display is executed by tapping display section 11 using the user's finger tip or joint, the user's finger can remain on the cabinet until the procedure is completed after the operation of temporarily storing the content data, and the operation of displaying again the temporarily-stored content data.

As such, the invention can implement a mobile phone that enables a user to put content data into a temporarily-storage state and display the content data again with a simple and easy operation. The operation methods described above may be combined together for use, and the content data being a manipulation target is not restrictive to the above-described

### examples.

In the embodiment, exemplified is the case of using an organic EL device for explicit-display section 15 of manipulation section 21 for data-saving manipulation, and described is the case that the organic EL device works to explicitly display, in letters and characters, the title or others of content data put in the temporary-storage state as being selected as a manipulation target. The function element of explicit-display section 15 in the invention is not surely restrictive thereto.

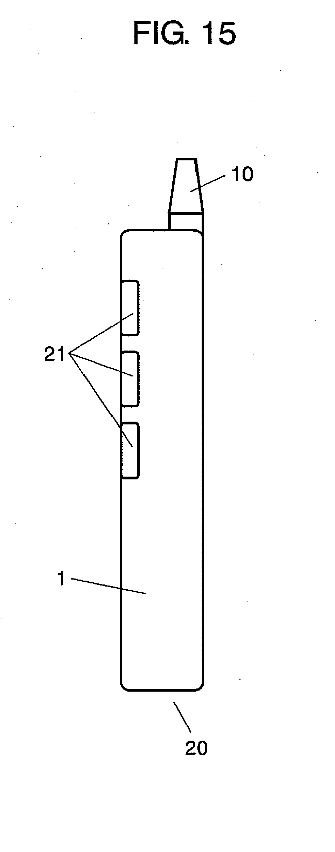

For example, as an alternative to the organic EL device, an LED (Light-Emitting Diode) may be disposed to each of manipulation sections 21, and when content data is put into the temporary-storage state by a finger-sliding operation to any predetermined manipulation section 21, the LED disposed to manipulation section 21 may be illuminated. FIG. 15 is a side view of the mobile phone in the embodiment, showing another configuration.

In the configuration of FIG. 15, explicit-display section 15 (not shown) is an LED, and in each of manipulation sections 21, a light-transmissive resin component (light-guidance section) is provided across unit cabinet 1, from the front surface to the side surface. With such a configuration, unit cabinet 1 can be illuminated also from the side surface when the LED is illuminated, and the resulting mobile unit can be configured at a lower cost. In this case, by using pad member 31 of capacitance type, any finger movement on the side surface of manipulation sections 21 can be also detected. This thus enables to detect any finger movement also on curved surfaces and side surfaces. The light-transmissive resin component is surely extended from the side surface to the rear surface.

As another preferable configuration for such mobile phone 20, if the user erroneously goes through again the data-saving manipulation to manipulation section 21 that is already through with such an operation, the user may be notified of the details of the temporarily-stored content data.

In mobile phone 20 of the embodiment, exemplified is the configuration that display section 11 is an LCD. This is surely not restrictive, and display section 11 may be an organic EL device. With this being the case, the organic EL device may be extended to the position of manipulation sections 21, and manipulation sections 21 and display section 11 may be used as a piece. In the practical sense, however, providing manipulation sections 21 separately from display section 11 is more preferable as this helps create users' awareness for the moving operation of a finger.

To perform the moving operation of finger described in the embodiment in a smooth manner, manipulation sections 21 may be disposed at a position in the vicinity of display section 11, and unit cabinet 1 may be so disposed that the upper surface thereof comes between manipulation section 21 and display section 11 with no height difference, for example.

Manipulation section 21 may be solely provided, but considering the usability, manipulation section 21 is preferably disposed at a plurality of positions. If this is the case, the area to be occupied by each of manipulation sections 21 is of a size allowing at least a user's finger to touch, and a size not causing a finger placed on one manipulation section 21 to interfere with others. As such, it is important to dispose, at predetermined intervals, manipulation sections 21 being operation areas for the tracing operation using a finger.

Exemplified in the embodiment is the case of performing the moving operation using finger. This is surely not restrictive, and the tracing operation may be performed using a pen, e.g., stylus pen. If this is the case, pad member 31 may be so configured as to detect a position signal when touched by a pen tip or others.

In the embodiment, a mobile terminal unit is exemplified by a mobile phone. This is surely not restrictive, and the invention can be applied to information terminal units typified byPDAs (Personal Digital Assistants), and mobile terminal units including portable game machines, remote controls, or others, in addition to portable wireless terminal units typified by mobile phones and SmartPhones. Moreover, recent electrical appliances, e.g., music players and vehicle navigation systems, are often equipped with a display section. The invention can be applied to various types of such electrical appliances including personal computers, and can increase the usability thereof.

As described in the foregoing, the invention can achieve a special effect of being able to manipulating any desired content data in a simple and easy manner. The invention thus serves effective as an input unit for making inputs of various types of information, a mobile terminal unit such as mobile phone using the input unit, a content data manipulation method in the mobile terminal unit, and others.

## Claims

1. An input unit, comprising:
a display section that displays thereon content data;
a manipulation section that is provided close to the display section for being in charge of manipulation related to the content data; and
a pad section that detects a movement of an object which moves on the display section and the manipulation section.

2. A mobile terminal unit, comprising:
a display section that displays thereon content data;
a manipulation section that is provided close to the display section for being in charge of manipulation related to the content data;
a pad section that detects a movement of an object which moves on the display section and the manipulation section; and
a control section that performs a predetermined process with respect to the content data responsive to the movement of the object detected by the pad section.

3. The mobile terminal unit of claim 2, further comprising
a memory section for storing therein the content data, wherein
when the pad section detects the movement of the object from the display section to the manipulation section, the control section controls the memory section so as to store the content data in the memory section.

4. The mobile terminal unit of claim 2, wherein
when the pad section detects the movement of the object from the display section to the manipulation section, the control section controls
the display section so as to hide a display of the content data.

5. The mobile terminal unit of claim 3, wherein
the manipulation section includes an explicit-display section that displays the content data being stored in the memory section, and
when the pad section detects the movement of the object from the display section to the manipulation section, the control section controls the explicit-display section so as to explicitly display on the explicit-display section the content data that is stored in the memory section.

6. The mobile terminal unit of claim 5, wherein
the explicit-display section explicitly displays a title of the content data.

7. (Currently Amended) The mobile terminal unit of claim 5, wherein
the manipulation section is one of a plurality of manipulation sections,
each of the plurality of manipulation sections are each provided with the explicit-display section, and
when the pad section detects the movement of the object from the display section to the manipulation section, the control section controls
the explicit-display sections on which
the object terminates movement so as to
display on the explicit-display section that the content data is stored in the memory section.

8. The mobile terminal unit of claim 2, further comprising
a memory section that stores therein the content data, wherein
when the pad section detects the movement of the object from the manipulation section to the display section, the control section reads the content data from the memory section.

9. The mobile terminal unit of claim 8, wherein
when the pad section detects the movement of the object from the manipulation section to the display section, the control section controls the display section so as to display the content data on the display section.

10. The mobile terminal unit of claim 3, wherein
when the control section detects a predetermined operation, details of the content data stored in the memory section is notified.

11. The mobile terminal unit of claim 10, wherein
the predetermined operation is terminating movement of the object on the manipulation section for a predetermined length of time or longer.

12. The mobile terminal unit of claim 3, wherein
when the control section detects the predetermined operation, the control section enlarges and displays the content data with no overlay in a display area of the display section.

13. The mobile terminal unit of claim 12, wherein
the predetermined operation is of tapping the display section.

14. The mobile terminal unit of claim 3, wherein
the manipulation section is provided with a light-guidance section that extends to a surface including a side surface of a cabinet.

15. The mobile terminal unit of claim 2, wherein the pad section detects a movement of a pen or a finger on the display section and the manipulation section.

16. A content data manipulation method using a mobile terminal unit, including: a display section that displays thereon content data; a manipulation section that is provided close to the display section for being in charge of manipulation related to the content data; a pad section that detects a movement of an object which moves on the display section and the manipulation section; and a control section that exercises control over the display section and the pad section, the method comprising;
a first step of detecting the movement of the object by the pad section; and
a second step of performing a predetermined process by the control section with respect to the content data based on the movement of the object detected by the pad section.
